# EUROPEAN PATENT SPECIFICATION

(11) **EP 1 211 302 B1**
(45) Date of publication and mention of the grant of the patent: **06.08.2003**
(21) Application number: 01127763.9
(22) Date of filing: 21.11.2001
(51) Int. Cl.: C10M 169/04, C10M 171/00, C10M 171/02, C10M 171/04, C10M 111/04, C10M 107/32, C10M 107/34, C09K 5/04, C10N 20/02

(54) **Refrigerating machine oil composition with carbon dioxide as refrigerant**
Ölzusammensetzung für Kältemaschine mit Kohlendioxid als Kältemittel
Composition d'huile pour machine réfrigérante dont le réfrigérant est le dioxyde de carbone

(30) Priority: 21.11.2000 JP 2000354629
(43) Date of publication of application: 05.06.2002
(73) Proprietor: Nippon Mitsubishi Oil Corporation, Minato-ku, Tokyo 105-8412 (JP)
(72) Inventor: Ohsumi, Tomomasa, Nippon Mitsubishi Oil Corp., Tokyo 105-8412 (JP); Takigawa, Katsuya, Nippon Mitsubishi Oil Corp., Tokyo 105-8412 (JP)
(74) Representative: Grünecker, Kinkeldey, Stockmair & Schwanhäusser Anwaltssozietät

(56) References cited:
- EP-A- 0 377 122
- EP-A- 0 428 757
- EP-A- 0 461 262
- EP-A- 0 992 572
- EP-A- 1 028 156
- DE-A- 19 719 132
- DE-U- 29 914 502

## Description

The present invention relates to a fluid composition for refrigerating machines.

The recent problem of ozone layer destruction imposed limitations on use of CFCs (chlorofluorocarbons) and HCFCs (hydrochlorofluorocarbons), which have been used heretofore as refrigerants for refrigerating machines, and HFCs (hydrofluorocarbons) are being used as refrigerants instead of those restricted compounds. These HFC refrigerants, however, still involve problems of high global warming potential and others. Thus use of natural refrigerants, such as carbon dioxide, ammonia, hydrocarbons, and the like, has been studied as substitute refrigerants for such fluorocarbon based refrigerants.

Among them, carbon dioxide (CO₂) is superior in safety because of being safe for the environment and, though it was out of the mainstream of refrigerants, it has been used heretofore as a refrigerant for refrigerators and others and thus research is recently going on to apply it as a refrigerant for automotive air conditioners, room air conditioners, or heat pumps for hot water supply incorporating open type compressors or hermetic, electric compressors.

Incidentally, refrigerating/air conditioning equipment is normally provided with a refrigerant circulating system consisting of a refrigerant compressor, a condenser, an expander, an evaporator, and so on, and in this refrigerant circulating system the refrigerating machine oil, which is lubricating oil for the refrigerant compressor, circulates together with the refrigerant in cycles. Accordingly, the refrigerating machine oil needs to satisfy various property requirements including miscibility with refrigerant, fluidity at low temperatures, stability, etc., in addition to lubricity. However, these properties of refrigerating machine oil are readily affected by types of refrigerants, and the properties were not satisfactory in lubricity and stability when the refrigerating machine oils for fluorocarbon based refrigerants commonly used heretofore were used together with the CO₂ refrigerant.

Development has thus been made to develop novel refrigerating machine oils suitable for use along with the CO₂ refrigerant, and refrigerating machine oils using a variety of base oils have been proposed. For example, the polyalkylene glycol (PAG) as disclosed in Japanese Patent Kokai (Laid-Open) Publication No. H10-46169 or JP-A-10046169 exhibits relatively high miscibility with the CO₂ refrigerant and is also superior in fluidity at low temperatures and hydrolytic stability, and it is thus drawing attention as one of base materials in the refrigerating machine oils for the CO₂ refrigerant.

EP-A-0377122, EP-A-0461262, EP-A-1028156 and EP-A-0428757 disclose lubricating oils for a refrigerator comprising polyoxyalkylene derivatives.

EP-A-0992572, DE-A-19719132 and DE-U-29914502 disclose ester-based or ether-based refrigerator machine oils for use with a refrigerant containing carbon dioxide.

Incidentally, inside the refrigerating equipment a mixture (fluid composition) of the refrigerant and the refrigerating machine oil circulates while changing its mixture ratio in the refrigerant circulating system, and it is very difficult to control the composition of the fluid composition (the mixing ratio of the refrigerant and the refrigerating machine oil) at a certain portion in the refrigerant circulating system. Accordingly, in order to ensure sufficient oil return without stagnation of the refrigerating machine oil in the refrigerant circulating system, it is important that the refrigerating machine oil should demonstrate the miscibility with the refrigerant in a wide composition range and it is desirable that the refrigerating machine oil should have a wide miscible region, particularly, at a low-temperature portion like the exit part of the evaporator.

However, the aforementioned conventional PAG based refrigerating machine oil demonstrated the miscibility at low composition ratios of the CO₂ refrigerant, but the miscible range thereof was very narrow. Therefore, it was not always satisfactory for practical use. There is thus a method of reducing the viscosity of PAG in order to attain satisfactory refrigerant miscibility of such refrigerating machine oil, but in that case the lubricity and stability becomes insufficient, so as to fall into a vicious cycle.

The present invention has been accomplished in view of the issues in the above-stated prior art and an object of the invention is to provide a fluid composition comprising a refrigerating machine oil and a carbon dioxide refrigerant that demonstrates satisfactorily high fluidity at low temperatures, lubricity, and stability, said oil having a satisfactorily wide miscible region with the carbon dioxide refrigerant.

The present inventors have conducted diligent research in order to accomplish the above object and have completed the present invention on the basis of the finding that the above issues were solved by using a refrigerating machine oil containing polyalkylene glycol having a specific structure and satisfying a specific condition for kinematic viscosity at 100°C.

The present invention provides a fluid composition for refrigerating machines, said composition comprising a refrigerating machine oil comprising polyalkylene glycol represented by the following general formula (1):

R¹{-(OR³)ₙ-OR²}ₘ (1)

where R¹ represents a residue obtained by removing m hydroxyl groups from an organic compound having three to ten hydroxyl groups, R² hydrogen, an alkylene group of one to five carbons, or an acyl group of one to five carbons, R³ an alkylene group of two to four carbons, m an integer of 3 to 10, and n such an integer that a number average molecular weight of the polyalkylene glycol represented by said formula (1) becomes 500 to 3000 ,
wherein a kinematic viscosity at 100°C of said polyalkylene glycol is 5-20 mm²/s, and carbon dioxide as a refrigerant.

The preferred embodiments of the present invention will be described below in detail.

The refrigerating machine oil for the CO₂ refrigerant used according to the present invention comprises the polyalkylene glycol represented by the following general formula (1):

R¹{-(OR³)ₙ-OR²}ₘ (1).

In this formula, R¹ represents the residue obtained by removing m hydroxyl groups from the organic compound having three to ten hydroxyl groups (where m is an integer of 3 to 10). The compound having three to ten hydroxyl groups, stated in the present invention, encompasses such polyols as polyhydric alcohols, polyhydric phenols, and saccharides having three to ten hydroxyl groups.

Specific examples of the polyols include trihydric alcohols such as glycerol, 2-hydroxymethyl-1,3-propanediol, 1,2,3-butanetriol, 1,2,3-pentanetriol, 2-methyl-1,2,3-propanetriol, 2-methyl-2,3,4-butanetriol, 2-ethyl-1,2,3-butanetriol, 2,3,4-pentanetriol, 2,3,4-hexanetriol, 4-propyl-3,4,5-heptanetriol, 2,4-dimethyl-2,3,4-pentanetriol, 1,2,4-butanetriol, 1,2,4-pentanetriol, trimethylolethane, and trimethylolpropane; tetrahydric alcohols such as pentaerythritol, erythritol, 1,2,3,4-pentanetetrol, 2,3,4,5-hexanetetrol, 1,2,4,5-pentanetetrol, 1,3,4,5-hexanetetrol, diglycerol, and sorbitan; pentahydric alcohols such as adonitol, arabitol, xylitol, and triglycerol; hexahydric alcohols such as dipentaerythritol, sorbitol, mannitol, iditol, inositol, dulcitol, talose, and allose; octahydric alcohols such as sucrose; polyglycerols and dehydration condensates thereof; and so on. Among them, preferred are those having 3 to 8 hydroxyl groups, more preferred those having 3 to 6 hydroxyl groups, and still more preferred those having 3 or 4 hydroxyl groups.

In the foregoing general formula (1), m is an integer of 3 to 10 as stated above, preferably an integer of 3 to 8, more preferably an integer of 3 to 6, and still more preferably 3 or 4. If m is outside the above range, the molecular weight of the resultant polyalkylene glycol will be too large, so as to result in too high viscosity, whereby the miscible region will become narrow, particularly, in the low temperature range and the miscibility with the CO₂ refrigerant will become insufficient.

The polyalkylene glycol represented by the aforementioned general formula (1) may be either one of those wherein groups represented by -(OR³)ₙ-OR² substitute for all the hydroxyl groups of the foregoing organic compound (which will be referred to hereinafter as "completely etherified compounds") or those wherein. -(OR³)ₙ-OR² substitutes for some of the hydroxyl groups and the other hydroxyl groups are left (which will be referred to hereinafter as "partly etherified compounds") as long as the aforementioned condition for m is satisfied. It is, however, preferable to employ either of the completely etherified compounds, because the refrigerating machine oil can exhibit better fluidity at low temperatures, lubricity, and stability while having a wider miscible region with the CO₂ refrigerant.

In the above general formula (1), R² represents hydrogen, an alkyl group of one to five carbons, or an acyl group of one to five carbons. Here the alkyl group or the acyl group as R² may be either straight or branched; specifically, it can be either selected from a methyl group, an ethyl group, a straight or branched chain propyl group, a straight or branched chain butyl group, a straight or branched chain pentyl group, an acetyl group, an ethanoyl group, a straight or branched chain propanoyl group, a straight or branched chain butanoyl group, a straight or branched chain pentanoyl group, and so on. Among these, in terms of the miscibility with the CO₂ refrigerant and the wider miscible region, particularly, in the low temperature range, R² is more preferably either of hydrogen, the methyl group, the ethyl group, the straight or branched chain propyl group, the straight or branched chain butyl group, the acetyl group, the ethanoyl group, the straight or branched chain propanoyl group, and the straight or branched chain butanoyl group; still more preferably either of the methyl group, the ethyl group, the acetyl group, and the ethanoyl group; and most preferably either of hydrogen, the methyl group, and the acetyl group. If the carbon number of the alkyl group or the acyl group exceeds 5, the miscible region will become narrow, particularly, at low temperatures, and thus the miscibility with the CO₂ refrigerant will become insufficient.

Further, in the foregoing general formula (1), R³ represents an alkylene group of two to four carbons. Specific examples of this alkylene group include an ethylene group (-CH₂CH₂-), a propylene group (-CH(CH₃)CH₂-), a trimethylene group (-CH₂CH₂CH₂-), a butylene group (-CH(CH₂CH₃)CH₂-), a tetramethylene group (-CH₂CH₂CH₂CH₂-), and so on. Among these alkylene groups, more preferred are the ethylene group, the propylene group, the butylene group, and the tetramethylene group.

Furthermore, in the foregoing general formula (1), n indicates a recurring number (degree of polymerization) of the oxyalkylene group represented by OR³. Here the polyalkylene glycol represented by the foregoing general formula (1), is normally one obtained as a mixture of plural compounds having different numbers of n. In the present invention, the number average molecular weight of the polyalkylene glycol is 500 to 3000, preferably 600 to 2000, and more preferably 600 to 1500, and n is such an integer that the number average molecular weight of the polyalkylene glycol satisfies the above condition. If the number average molecular weight of the polyalkylene glycol is less than the foregoing lower limit, the lubricity under coexistence with carbon dioxide refrigerant will tend to become insufficient. If the number average molecular weight exceeds the foregoing upper limit on the other hand, the miscible region will become narrower, particularly, at low temperatures, so that the miscibility with the CO₂ refrigerant will be insufficient. Further, in the above-stated polyalkylene glycol, a ratio (Mw/Mn) of the weight average molecular weight (Mw) to the number average molecular weight (Mn) is preferably in a range of 1.00 to 1.20. If Mw/Mn exceeds 1.20, the miscibility with CO₂ refrigerant will tend to become insufficient.

Moreover, in the polyalkylene glycol represented by the foregoing general formula (1), the rate of ethylene group to the alkylene group represented by R³ is preferably not more than 80 mol%, more preferably not more than 60 mol%, still more preferably not more than 50 mol%, and particularly preferably not more than 40 mol%. If the rate of ethylene group to the alkylene group represented by R³ exceeds 80 mol%, the refrigerating machine oil will become solid at the ordinary temperature or the pour point thereof will tend to become high.

The kinematic viscosity at 100°C of the polyalkylene glycol represented by the foregoing general formula (1) needs to be 5 to 20 mm²/s, is preferably 6 to 18 mm²/s, more preferably 7 to 16 mm²/s, and still more preferably 8 to 15 mm²/s. When the kinematic viscosity at 100°C is less than 5 mm²/s, the lubricity under coexistence with the CO₂ refrigerant becomes insufficient. When it exceeds 20 mm²/s on the other hand, the miscible region becomes narrow, particularly, at low temperatures and the miscibility with the CO₂ refrigerant becomes insufficient. The kinematic viscosity at 40°C of the polyalkylene glycol, which is not particularly limited as long as the kinematic viscosity at 100°C meets the above condition, is preferably 10 to 200 mm²/s, and more preferably 20 to 150 mm²/s. When the kinematic viscosity at 40°C is less than 10 mm²/s, the lubricity and the hermetic sealability of the compressor tends to decrease. When it exceeds 200 mm²/s, the miscible region becomes narrow, particularly, at low temperatures and the miscibility with the CO₂ refrigerant tends to be insufficient.

The pour point of the polyalkylene glycol represented by the foregoing general formula (1), is preferably not more than -10°C and more preferably -20 to -50°C. When the polyalkylene glycol has the pour point over -10°C, the refrigerating machine oil tends to be readily solidified at low temperatures in the refrigerant circulating system.

The polyalkylene glycol used according to the present invention can be synthesized by the conventionally known methods (cf. "Alkylene oxide polymers" Mitsuta Shibata et al., published November 20, 1990, Kaibundo), and, for example, the polyalkylene glycol represented by the foregoing general formula (1) can be obtained by addition polymerization of one or more alkylene oxides to polyhydric alcohol with three to ten hydroxyl groups [R¹-(OH)ₘ; R¹ and m indicate the same as R¹ and m, respectively, defined in the foregoing general formula (1)], followed by etherification or esterification of the terminal hydroxyl group if necessary. When two or more different kinds of alkylene oxides are used in the production process of the polyalkylene glycol, the resultant polyalkylene glycol may be either a random copolymer or a block copolymer; the block copolymer is preferred in that it tends to exhibit better oxidation stability; on the other hand, the random copolymer is preferred in that it tends to exhibit better fluidity at low temperatures.

In production of the polyalkylene glycol represented by the foregoing general formula (1), an unsaturated group such as an allyl group might be formed in molecules through side reaction of propylene oxide during the production process. When the unsaturated group is formed in the polyalkylene glycol molecules, there readily occur the phenomena of degrading thermal stability of polyalkylene glycol itself, producing polymers to form sludge, and lowering antioxidation capability (oxidation preventing property) to produce peroxides. Particularly, if the peroxides are produced, they will decompose to produce compounds having the carbonyl group and the compounds having the carbonyl group will further react with the CO₂ refrigerant to produce acid amides, which will make clogging easy to occur in the capillary.

Accordingly, in the polyalkylene glycol used according to the present invention, the degree of unsaturation originating in the unsaturated group and the like is preferably low; specifically, it is preferably not more than 0.04 meq/g, more preferably not more than 0.03 meq/g, and most preferably not more than 0.02 meq/g. The peroxide value is preferably not more than 10.0 meq/kg, more preferably not more than 5.0 meq/kg, and most preferably 1.0 meq/kg. Further, the carbonyl value is preferably not more than 100 ppm by weight, more preferably not more than 50 ppm by weight, and most preferably not more than 20 ppm by weight.

The unsaturation degree, peroxide value, and carbonyl value stated in the present invention are values measured according to Standard Methods for the Analysis of Oil, Fats and Derivatives set by Japan Oil Chemists' Society. Namely, these are determined as follows: the unsaturation degree in the present invention is determined in such a way that a sample is reacted with the Wijs solution (ICl-acetic acid solution), the solution is kept at a dark place, thereafter excess ICl is reduced to iodine, the iodine is titrated with sodium thiosulfate to calculate an iodine value, this iodine value is converted to a vinyl equivalent, and this value of vinyl equivalent (meq/g) is referred to as the unsaturation degree;
the peroxide value stated in the present invention is determined in such a way that potassium iodide is added to a sample, free iodine produced is titrated with sodium thiosulfate, this free iodine is converted to a milliequivalent per kg of the sample, and this reduced value (meq/kg) is referred to as the peroxide value;
the carbonyl value stated in the present invention is determined in such a way that a sample is made to react with 2,4-dinitrophenylhydrazine to produce quinoid ions with coloring nature, absorbance of this sample is measured at 480 nm, the absorbance is converted to a carbonyl amount on the basis of a calibration curve preliminarily determined using cinnamaldehyde as a reference material, and the reduced value (ppm by weight) is referred to as the carbonyl value.

In the present invention, in order to obtain the polyalkylene glycol with low unsaturation degree, peroxide value, and carbonyl value, the reaction temperature during reaction of propylene oxide is preferably not more than 120°C (more preferably, not more than 110°C). If an alkali catalyst is used during the production, the unsaturation degree can be reduced by using an inorganic adsorbent, e.g., activated carbon, activated clay, bentonite, dolomite, aluminosilicate, or the like, in order to remove the alkali catalyst. It is also possible to prevent increase of the peroxide value or the carbonyl value by minimizing contact with oxygen or by adding an antioxidant, during the production of the polyalkylene glycol or during use thereof.

The refrigerating machine oil for the CO₂ refrigerant used in the present invention contains the polyalkylene glycol having the aforementioned structure, and it exhibits such excellent properties that the fluidity at low temperatures, lubricity, and stability are sufficiently high and the miscible region with the CO₂ refrigerant is sufficiently wide, even in single use of the polyalkylene glycol. Other base oils and additives stated below may be incorporated thereto if the case may demand. There are no specific restrictions on the content of the polyalkylene glycol in the refrigerating machine oil for the CO₂ refrigerant used in the invention as long as the oil does not lose the aforementioned excellent properties. The content is preferably not less than 50% by mass, based on the total amount of the refrigerating machine oil, more preferably not less than 70% by mass, still more preferably not less than 80% by mass, and particularly preferably not less than 90% by mass. When the content of the polyalkylene glycol represented by the foregoing general formula (1) is less than 50% by mass, either property tends to be inadequate among the various properties including the lubricity, refrigerant miscibility, thermal and chemical stability, and so on of the refrigerating machine oil.

In the refrigerating machine oil for the CO₂ refrigerant used in the invention, specific examples of the base oils, which can be used with the aforementioned polyalkylene glycol, include hydrocarbon based base oils such as mineral oils, olefin polymers, naphthalene compounds, alkylbenzene, and the like; oxygen-containing synthetic oils such as esters, ketones, polyphenyl ethers, silicones, polysiloxanes, perfluoroethers, polyvinyl ethers, and polyglycols except for the polyalkylene glycol used according to the present invention, and so on. The oxygen-containing synthetic oils preferably used among the above compounds, are the polyvinyl ethers and/or the polyglycols except for the polyalkylene glycol used according to the present invention.

As described above, the refrigerating machine oil for the CO₂ refrigerant used in the present invention contains the aforementioned polyalkylene glycol, and the hydrocarbon based oil and/or the oxygen-containing synthetic oil as occasion may demand, and these are mainly used as base oils. The refrigerating machine oil for the CO₂ refrigerant used in the present invention can be suitably used without addition of any additive, but it can also be used with addition of various additives described below, as occasion may demand.

For further enhancement of the abrasion resistance and load resistance of the refrigerating machine oil used in the invention, it may incorporate at least one type of phosphorus compound selected from the group consisting of phosphoric acid esters, acidic phosphoric acid esters, amine salts of acidic phosphoric acid esters, chlorinated phosphoric acid esters, phosphorous acid esters, and phosphorotioates. These phosphorus compounds are esters of phosphoric acid, phosphorous acid, or phosphorothioic acid with alkanols or polyether alcohols, or derivatives thereof.

As specific examples of the phosphoric acid esters there may be mentioned tributyl phosphate, tripentyl phosphate, trihexyl phosphate, triheptyl phosphate, trioctyl phosphate, trinonyl phosphate, tridecyl phosphate, triundecyl phosphate, tridodecyl phosphate, tritridecyl phosphate, tritetradecyl phosphate, tripentadecyl phosphate, trihexadecyl phosphate, triheptadecyl phosphate, trioctadecyl phosphate, trioleyl phosphate, triphenyl phosphate, tricresyl phosphate, trixylenyl phosphate, cresyldiphenyl phosphate, and xylenyldiphenyl phosphate;
as specific examples of the acidic phosphoric acid esters there may be mentioned monobutyl acid phosphate, monopentyl acid phosphate, monohexyl acid phosphate, monoheptyl acid phosphate, monooctyl acid phosphate, monononyl acid phosphate, monodecyl acid phosphate, monoundecyl acid phosphate, monododecyl acid phosphate, monotridecyl acid phosphate, monotetradecyl acid phosphate, monopentadecyl acid phosphate, monohexadecyl acid phosphate, monoheptadecyl acid phosphate, monooctadecyl acid phosphate, monooleyl acid phosphate, dibutyl acid phosphate, dipentyl acid phosphate, dihexyl acid phosphate, diheptyl acid phosphate, dioctyl acid phosphate, dinonyl acid phosphate, didecyl acid phosphate, diundecyl acid phosphate, didodecyl acid phosphate, ditridecyl acid phosphate, ditetradecyl acid phosphate, dipentadecyl acid phosphate, dihexadecyl acid phosphate, diheptadecyl acid phosphate, dioctadecyl acid phosphate, and dioleyl acid phosphate;
as specific examples of the amine salts of acidic phosphoric acid esters there may be mentioned salts of the above acidic phosphoric acid esters with amines such as methylamine, ethylamine, propylamine, butylamine, pentylamine, hexylamine, heptylamine, octylamine, dimethylamine, diethylamine, dipropylamine, dibutylamine, dipentylamine, dihexylamine, diheptylamine, dioctylamine, trimethylamine, triethylamine, tripropylamine, tributylamine, tripentylamine, trihexylamine, triheptylamine, and trioctylamine;
as specific examples of the chlorinated phosphoric acid esters there may be mentioned tris dichloropropyl phosphate, tris chloroethyl phosphate, tris chlorophenyl phosphate, and polyoxyalkylene bis[di(chloroalkyl)] phosphate;
as specific examples of the phosphorous acid esters there may be mentioned dibutyl phosphite, dipentyl phosphite, dihexyl phosphite, diheptyl phosphite, dioctyl phosphite, dinonyl phosphite, didecyl phosphite, diundecyl phosphite, didodecyl phosphite, dioleyl phosphite, diphenyl phosphite, dicresyl phosphite, tributyl phosphite, tripentyl phosphite, trihexyl phosphite, triheptyl phosphite, trioctyl phosphite, trinonyl phosphite, tridecyl phosphite, triundecyl phosphite, tridodecyl phosphite, trioleyl phosphite, triphenyl phosphite, and tricresyl phosphite; and
as specific examples of the phosphorothioates there may be mentioned tributyl phosphorothioate, tripentyl phosphorothioate, trihexyl phosphorothioate, triheptyl phosphorothioate, trioctyl phosphorothioate, trinonyl phosphorothioate, tridecyl phosphorothioate, triundecyl phosphorothioate, tridodecyl phosphorothioate, tritridecyl phosphorothioate, tritetradecyl phosphorothioate, tripentadecyl phosphorothioate, trihexadecyl phosphorothioate, triheptadecyl phosphorothioate, trioctadecyl phosphorothioate, trioleyl phosphorothioate, triphenyl phosphorothioate, tricresyl phosphorothioate, trixylenyl phosphorothioate, cresyldiphenyl phosphorothioate, xylenyldiphenyl phosphorothioate, tris(n-propylphenyl)phosphorothioate, tris (isopropylphenyl)phosphorothioate, tris (n-butylphenyl)phosphorothioate, tris(isobutylphenyl)phosphorothioate, tris(s-butylphenyl)phosphorothioate, and tris(t-butylphenyl)phosphorothioate.

When these phosphorus compounds are added to the refrigerating machine oil used in the invention, there are no particular restrictions on their content, but it is normally desirable to add the phosphorus compounds in such an amount that the content thereof is 0.01 to 10.0% by mass and more preferably 0.02 to 5.0% by mass, based on the total amount of the refrigerating machine oil (i.e., based on the total amount of the base oil and all additives incorporated).

In addition, for further improvement in heat and hydrolytic stability of the refrigerating machine oil used in the invention, the oil preferably includes at least one epoxy compound selected from the group consisting of
(1) phenylglycidyl ether epoxy compounds,
(2) alkylglycidyl ether epoxy compounds,
(3) glycidyl ester epoxy compounds,
(4) allyloxirane compounds,
(5) alkyloxirane compounds,
(6) alicyclic epoxy compounds,
(7) epoxidized fatty acid monoesters, and
(8) epoxidized vegetable oils.

Specific examples of (1) phenylglycidyl ether epoxy compounds include phenylglycidyl ethers and alkylphenylglycidyl ethers. Here, the alkylphenylglycidyl ethers may have 1-3 alkyl groups of 1-13 carbons, among which preferred examples include those with one alkyl group of 4-10 carbons, such as n-butylphenylglycidyl ether, i-butylphenylglycidyl ether, sec-butylphenylglycidyl ether, tert-butylphenylglycidyl ether, pentylphenylglycidyl ether, hexylphenylglycidyl ether, heptylphenylglycidyl ether, octylphenylglycidyl ether, nonylphenylglycidyl ether, and decylphenylglycidyl ether.

Specific examples of (2) alkylglycidyl ether epoxy compounds include decylglycidyl ether, undecylglycidyl ether, dodecylglycidyl ether, tridecylglycidyl ether, tetradecylglycidyl ether, 2-ethylhexylglycidyl ether, neopentylglycoldiglycidyl ether, trimethylolpropane triglycidyl ether, pentaerythritol tetraglycidyl ether, 1,6-hexanediol diglycidyl ether, sorbitolpolyglycidyl ether, polyalkyleneglycol monoglycidyl ether, and polyalkyleneglycol diglycidyl ether.

Specific example of (3) glycidyl ester epoxy compounds include compounds represented by the following general formula (2): 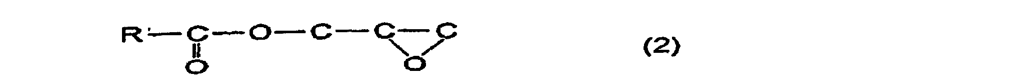 where R represents a hydrocarbon group of 1-18 carbons.

In formula (2) above, R represents a hydrocarbon group of 1-18 carbons, and as such hydrocarbon groups there may be mentioned alkyl groups of 1-18 carbons, alkenyl groups of 2-18 carbons, cycloalkyl groups of 5-7 carbons, alkylcycloalkyl groups of 6-18 carbons, aryl groups of 6-10 carbons, alkylaryl groups of 7-18 carbons and arylalkyl groups of 7-18 carbons. Preferred among these are alkyl groups of 5-15 carbons, alkenyl groups of 2-15 carbons, phenyl groups and alkylphenyl groups with alkyl groups of 1-4 carbons.

Specific preferred examples among the glycidyl ester epoxy compounds include glycidyl-2,2-dimethyl octanoate, glycidyl benzoate, glycidyl-tert-butyl benzoate, glycidyl acrylate, glycidyl methacrylate, and the like.

Specific examples of (4) allyloxirane compounds include 1,2-epoxystyrene and alkyl-1,2-epoxystyrene.

Specific examples of (5) alkyloxirane compounds include 1,2-epoxybutane, 1,2-epoxypentane, 1,2-epoxyhexane, 1,2-epoxyheptane, 1,2-epoxyoctane, 1,2-epoxynonane, 1,2-epoxydecane, 1,2-epoxyundecane, 1,2-epoxydodecane, 1,2-epoxytridecane, 1,2-epoxytetradecane, 1,2-epoxypentadecane, 1,2-epoxyhexadecane, 1,2-epoxyheptadecane, 1,1,2-epoxyoctadecane, 2-epoxynonadecane and 1,2-epoxyeicosane.

As (6) alicyclic epoxy compounds there may be mentioned compounds wherein carbon atoms composing the epoxy group are directly part of the alicycle, such as compounds represented by the following general formula (3):

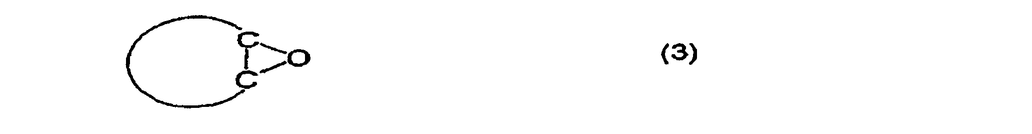

Specific examples of the alicyclic epoxy compounds include 1,2-epoxycyclohexane, 1,2-epoxycyclopentane, 3,4-epoxycyclohexylmethyl-3,4-epoxycyclohexane carboxylate, bis(3,4-epoxycyclohexylmethyl) adipate, exo-2,3-epoxynorbornane, bis(3,4-epoxy-6-methylcyclohexylmethyl) adipate, 2-(7-oxabicyclo[4.1.0]hept-3-yl)-spiro(1,3-dioxane-5,3'-[7]oxabicyclo[4,1.0]heptane, 4-(1'-methylepoxyethyl)-1,2-epoxy-2-methylcyclohexane, and 4-epoxyethyl-1,2-epoxycyclohexane.

Specific examples of (7) epoxidized fatty acid monoesters include esters of epoxidized fatty acids of 12-20 carbons and alcohols of 1-8 carbons, phenols or alkylphenols. Particularly preferred for use are butyl, hexyl, benzyl, cyclohexyl, methoxyethyl, octyl, phenyl, and butylphenyl esters of epoxystearic acid.

Specific examples of (8) epoxidized vegetable oils include epoxy compounds of vegetable oils such as soybean oil, linseed oil, and cottonseed oil.

Among these epoxy compounds, phenylglycidyl ether epoxy compounds, glycidyl ester epoxy compounds, alicyclic epoxy compounds and epoxidized fatty acid monoesters are preferred for further improved heat and hydrolytic stability, with glycidyl ester epoxy compounds and alicyclic epoxy compounds being even more preferred.

When these epoxy compounds are incorporated in the refrigerant oil for CO₂ refrigerant used in the invention, there are no particular restrictions on their addition content but the epoxy compound is usually added to a content of 0.1-5.0% by mass and more preferably 0.2-2.0% by mass, based on the total amount of the refrigerating machine oil (the total amount of the base oil and all incorporated additives).

Two or more different types of the aforementioned phosphorus compounds and epoxy compounds may, of course, be used in combination.

In order to further improve the performance, the refrigerating machine oil for the CO₂ refrigerant used in the invention may be incorporated, as required, with hitherto publicly known additives for refrigerating machine oils, for example, phenol-type antioxidants such as di-tert-butyl-p-cresol and bisphenol A; amine-type antioxidants such as phenyl-α-naphthylamine and N,N-di(2-naphthyl)-p-phenylenediamine; wear resistance agents such as zinc dithiophosphate; extreme pressure agents such as chlorinated paraffin and sulfur compounds; oiliness improvers such as fatty acids; antifoaming agents such as silicone types; metal inactivators such as benzotriazole; viscosity index improvers; pour-point depressants; detergent dispersants and the like, either alone or in combination of more than one-type. The total amount of the additives is not particularly limited, but the content is preferably not more than 10% by mass and more preferably not more than 5% by mass, based on the total amount of the refrigerating machine oil (i.e., the total amount of the base oil and all incorporated additives).

There are no specific restrictions on the kinematic viscosity of the refrigerating machine oil for the CO₂ refrigerant used in the present invention, but the kinematic viscosity at 40°C of the refrigerating machine oil is preferably 10 to 200 mm²/s and more preferably 20 to 150 mm²/s. When the kinematic viscosity at 40°C is less than 10 mm²/s, the lubricity and the hermetic sealability of the compressor tends to degrade. When the kinematic viscosity at 40°C exceeds 200 mm²/s, the miscible region becomes narrow, particularly, at low temperatures, and the miscibility with the carbon dioxide refrigerant tends to be insufficient. On the other hand, the kinematic viscosity at 100°C of the refrigerating machine oil for the CO₂ refrigerant used in the invention is preferably 5 to 20 mm²/s and more preferably 6 to 18 mm²/s. When the kinematic viscosity at 100°C is less than 5 mm²/s, the lubricity and the hermetic sealability of the compressor tends to degrade. When the kinematic viscosity at 100°C exceeds 20 mm²/s, the miscible region becomes narrow, particularly, at low temperatures, and the miscibility with the carbon dioxide refrigerant tends to be insufficient.

In the refrigerant circulating system, normally, the content of water mixed in the system needs to be kept as small as possible, and in this respect the moisture content in the refrigerating machine oil used in the present invention is preferably not more than 500 ppm, more preferably not more than 200 ppm, and still more preferably not more than 100 ppm. In general, since the polyalkylene glycol has relatively high hygroscopicity, it is preferable to pay fine attention to the moisture content on the occasion of introducing the refrigerating machine oil for the CO₂ refrigerant used in the invention into the refrigerant circulating system.

The refrigerating machine oil for the CO₂ refrigerant used according to the present invention, having the above structure, is used as a fluid composition of mixture with the CO₂ refrigerant in the refrigerating machines for the CO₂ refrigerant. Namely, the fluid composition for the refrigerating machines of the present invention contains the foregoing refrigerating machine oil for the CO₂ refrigerant used according to the present invention, and the CO₂ refrigerant. There are no specific restrictions on a blending ratio of the refrigerating machine oil and the refrigerant in the fluid composition for the refrigerating machines of the present invention, but the blending ratio of the refrigerating machine oil to 100 parts by weight of the refrigerant is preferably 1 to 500 parts by weight and more preferably 2 to 400 parts by weight.

The fluid composition for the refrigerating machines of the present invention contains the CO₂ refrigerant as described above, but may further contain another refrigerant, e.g., hydrofluorocarbon (HFC), hydrocarbon, ammonia, and so on.

As hydrofluorocarbon refrigerants there may be mentioned those having 1-3 and preferably 1 or 2 carbon atoms. Specific examples include difluoromethane (HFC-32), trifluoromethane (HFC-23), pentafluoroethane (HFC-125), 1,1,2,2-tetrafluoroethane (HFC-134), 1,1,1,2-tetrafluoroethane (HFC-134a), 1,1,1-trifluoroethane (HFC-143a), 1,1,-difluoroethane (HFC-152a), and mixtures of two or more kinds of them. The refrigerant is optionally selected in accordance with the intended use and the required performance, and as preferred examples there may be mentioned HFC-32 alone; HFC-23 alone; HFC-134a alone; HFC-125 alone; a mixture of HFC-134a/HFC-32 = 60-80% by mass/40-20% by mass; a mixture of HFC-32/HFC-125 = 40-70% by mass/60-30% by mass; a mixture of HFC-125/HFC-143a = 40-60% by mass/60-40% by mass; a mixture of HFC-134a/HFC-32/HFC-125 = 60% by mass/30% by mass/10% by mass; a mixture of HFC-134a/HFC-32/HFC-125 = 40-70% by mass/15-35% by mass/5-40% by mass; and a mixture of HFC-125/HFC-134a/HFC-143a = 35-55% by mass/1-15% by mass/40-60% by mass. More specific examples include a mixture of HFC-134a/HFC-32 = 70/30% by mass; a mixture of HFC-32/HFC-125 = 60/40% by mass; a mixture of HFC-32/HFC-125 = 50/50% by mass (R410A); a mixture of HFC-32/HFC-125 = 45%/55% by mass (R410B); a mixture of HFC-125/HFC-143a = 50/50% by mass (R507C); a mixture of HFC-32/HFC-125/HFC-134a = 30/10/60% by mass; a mixture of HFC-32/HFC-125/HFC-134a = 23/25/52% by mass (R407); a mixture of HFC-32/HFC-125/HFC-134a = 25/15/60% by mass (R407E); and a mixture of HFC-125/HFC-134a/HFC-143a = 44/4/52% by mass (R404A).

The hydrocarbon refrigerants are preferably gas at 25°C under 1 atm. Specifically, they include alkanes, cycloalkanes, and alkenes of 1 to 5 carbons and preferably 1 to 4 carbons, and mixtures thereof. Specific examples of such hydrocarbon refrigerants include methane, ethylene, ethane, propylene, propane, cyclopropane, butane, isobutane, cyclobutane, methylcyclopropane, and mixtures of two or more of these compounds. Propane, butane, isobutane, and mixtures of at least two kinds are preferred among these.

There are no specific limitations to the mixing ratio of carbon dioxide and hydrofluorocarbon and/or hydrocarbon, but the total amount of hydrofluorocarbon and hydrocarbon to 100 parts by weight of carbon dioxide is preferably 1 to 200 parts by weight and more preferably 10 to 100 parts by weight.

The refrigerating machine oil used in the present invention fully satisfies all the performance requirements of the lubricity, refrigerant miscibility, low-temperature fluidity, stability, etc. in a good balance and-can be suitably applied to the refrigerating equipment or heat pumps having the reciprocating or rotary, open or hermetic compressors. The foregoing refrigerating equipment, more specifically, includes automotive air conditioners, dehumidifiers, freezers, freeze and refrigeration warehouses, automatic vending machines, showcases, cooling apparatus in chemical plants, air conditioners for residential use, heat pumps for hot water supply, and so on.

### Examples

The present invention will be described more specifically based on examples and comparative examples.

### Examples 1 to 6 and Comparative Examples 1 to 4

In Examples 1 to 6 and Comparative Examples 1 to 4, sample oils were prepared using base oils 1 to 10 having structures represented by the following formulas (4) to (13), respectively. The kinematic viscosities, the pour points, and the total acid values of the sample oils obtained are presented in Table 1. In the following formulas (4) to (13), EO represents an oxyethylene group, PO an oxypropylene group, Me a methyl group, and Ac an acetyl group. Further, - (EO, PO) ₙ - represents a polyoxyalkylene group produced by random copolymerization of ethylene oxide with propylene oxide.

### Base oil 1:

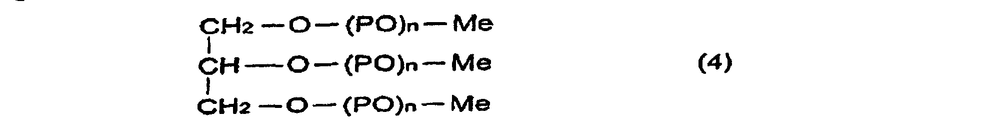

[number average molecular weight: 1000, ratio (M_{w}/Mₙ) of weight average molecular weight (M_{w}) to number average molecular weight (Mₙ) : 1.1, rate of oxyethylene group among all oxyalkylene groups: 0 mol%]

### Base oil 2:

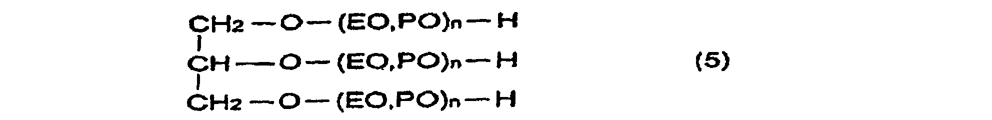

[number average molecular weight: 1400, ratio (M_{w}/Mₙ) of weight average molecular weight (M_{w}) to number average molecular weight (Mₙ) : 1.1, rate of oxyethylene group among all oxyalkylene groups: 40 mol%]

### Base oil 3:

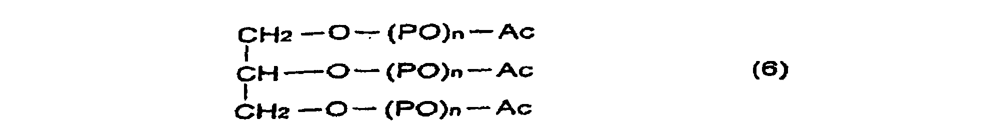

[number average molecular weight: 1000, ratio (M_{w}/Mₙ) of weight average molecular weight (M_{w}) to number average molecular weight (Mₙ) : 1.1, rate of oxyethylene group among all oxyalkylene groups: 0 mol%]

### Base oil 4:

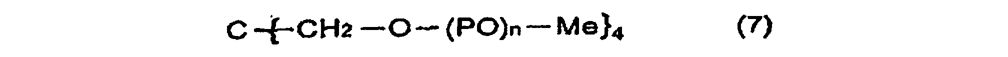

[number average molecular weight: 1000, ratio (M_{w}/Mₙ) of weight average molecular weight (M_{w}) to number average molecular weight (Mₙ) : 1.1, rate of oxyethylene group among all oxyalkylene groups: 0 mol%]

### Base oil 5:

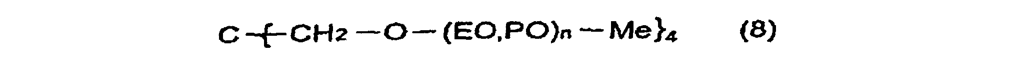

[number average molecular weight: 1000, ratio (M_{w}/Mₙ) of weight average molecular weight (M_{w}) to number average molecular weight (Mₙ) : 1.1, rate of oxyethylene group among.all oxyalkylene groups: 40 mol%]

### Base oil 6:

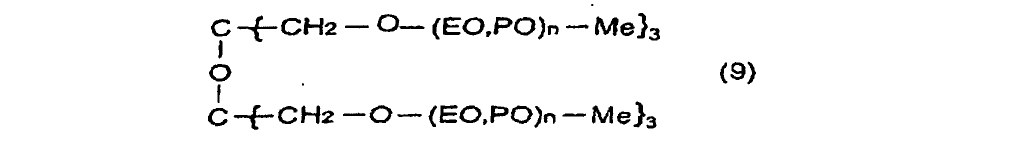

[number average molecular weight: 1200, ratio (M_{w}/Mₙ) of weight average molecular weight (M_{w}) to number average molecular weight (Mₙ) : 1.1, rate of oxyethylene group among all oxyalkylene groups: 0 mol%]

### Base oil 7:

Me-O-(PO)_{n'}-H (10)

[number average molecular weight: 1200, ratio (M_{w}/Mₙ) of weight average molecular weight (M_{w}) to number average molecular weight (Mₙ) : 1.1, rate of oxyethylene group among all oxyalkylene groups: 0 mol%]

### Base oil 8:

Me-O-(PO)_{n'}-Me (11)

[number average molecular weight: 1200, ratio (M_{w}/Mₙ) of weight average molecular weight (M_{w}) to number average molecular weight (Mₙ) : 1.1, rate of oxyethylene group among all oxyalkylene groups: 0 mol%]

### Base oil 9:

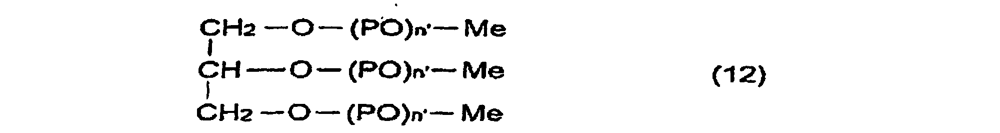

[number average molecular weight: 400, ratio (M_{w}/Mₙ) of weight average molecular weight (M_{w}) to number average molecular weight (Mₙ) : 1.1, rate of oxyethylene group among all oxyalkylene groups: 0 mol%]

### Base oil 10:

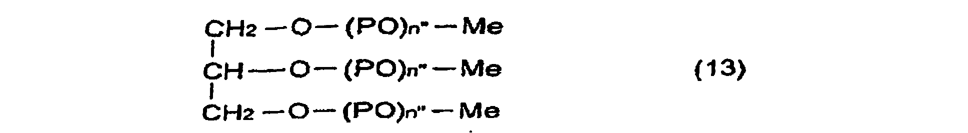

[number average molecular weight: 2000, ratio (M_{w}/Mₙ) of weight average molecular weight (M_{w}) to number average molecular weight (Mₙ) : 1.1, rate of oxyethylene group among all oxyalkylene groups: 0 mol%]

The following tests were then conducted using each of the sample oils of Examples 1-6 and Comparative Examples 1-4.

### (Refrigerant Miscibility Test)

In accordance with the "Refrigerant Miscibility Testing Method" of JIS-K-2211 "Refrigerating Machine Oils," the CO₂ refrigerant was mixed with each sample oil so that the sample oil was mixed at mixing rates presented in Table 1 in mixtures of the sample oil and the CO₂ refrigerant and so that the total amount of each mixture was 3 g, and each mixture was observed to determine whether the refrigerant and the sample oil was miscible or separate at -30°C. The results obtained are presented in Table 1.

### (Stability Test under Refrigerant Atmosphere)

An autoclave was charged with 50 g of each sample oil, 10 g of the carbon dioxide refrigerant, and a catalyst (iron wires, aluminum wires, and copper wires of 1.6 mmφ × 50 mm three each) and sealed, thereafter heated to 175°C, and then retained for two weeks. After that, carbon dioxide was removed from the sample oil, the appearance of the sample oil and the appearance of the catalyst were observed, and the total acid value of the sample oil was measured. The results obtained are presented in Table 1.

### (Lubricity Test)

In accordance with ASTM D 3233, while the CO₂ refrigerant was introduced at the flow rate of 10 l/h into 60 g of each sample oil, running-in operation was carried out under the load of 250 1b in the condition of the temperature 50°C of the sample oil for five minutes, and thereafter the burning load was measured. The results obtained are presented in Table 1.

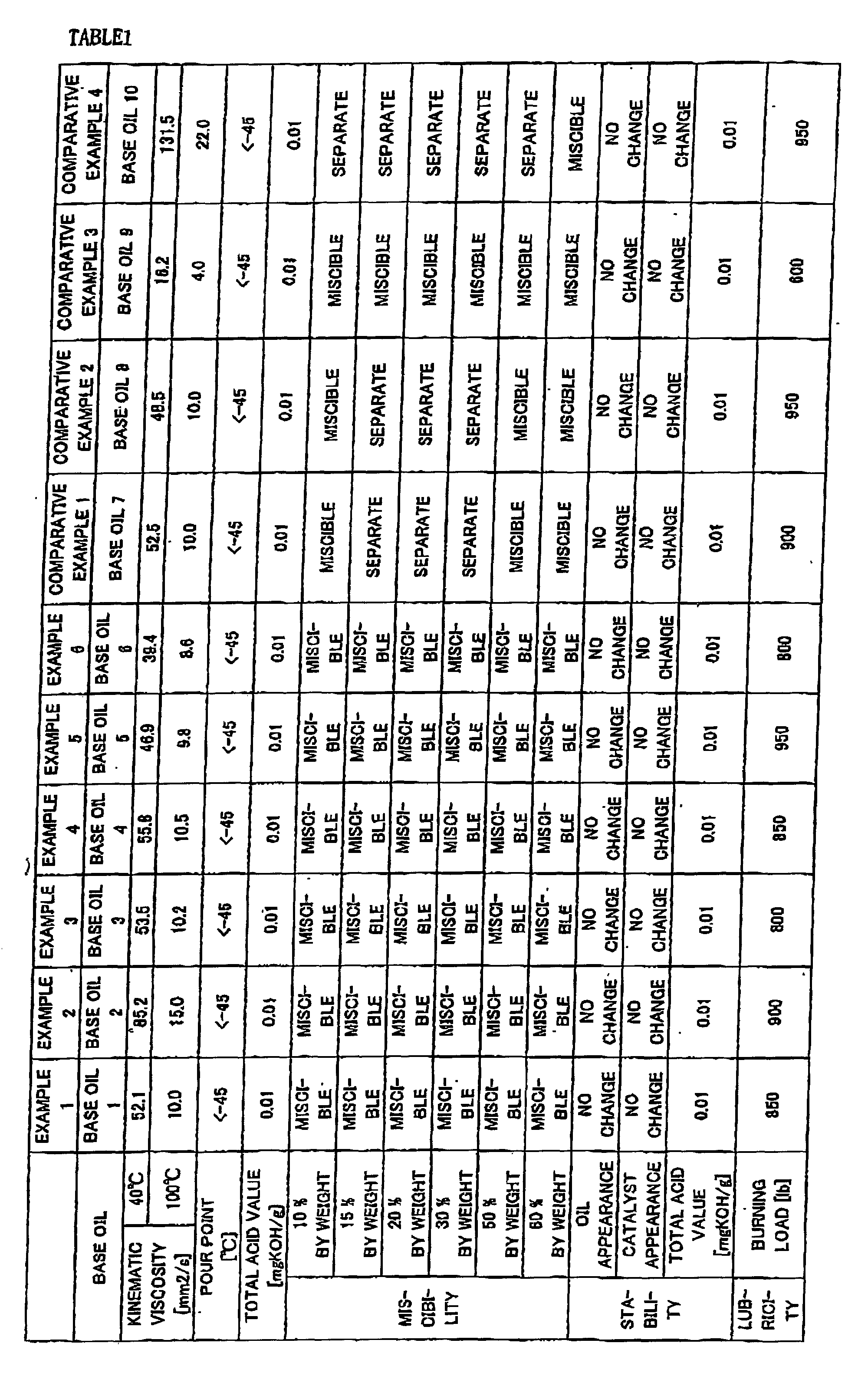

As apparent from the results presented in Table 1, it was verified that the sample oils of Examples 1 to 6, when used together with the CO₂ refrigerant, were excellent in all the properties of lubricity, low-temperature fluidity, and stability in a good balance and had the satisfactorily wide miscible region at the low temperature (-30°C).

In contrast to it, the sample oils of Comparative Examples 1 to 4 using the polyalkylene glycol compounds except for the polyalkylene glycol used according to the present invention, when used with the CO₂ refrigerant, were unsatisfactory in either of the refrigerant miscibility and lubricity.

As described above, the present invention provides a fluid composition containing the refrigerating machine oil for the carbon dioxide refrigerant that demonstrates the satisfactorily high fluidity at low temperatures, lubricity, and stability and that has the satisfactorily wide miscible region with the CO₂ refrigerant.

## Claims

1. A fluid composition for refrigerating machines, said composition comprising (i) a refrigerating machine oil comprising polyalkylene glycol represented by the following general formula (1):
R¹{-(OR³)ₙ-OR²}ₘ (1)
where R¹ represents a residue obtained by removing m hydroxyl groups from an organic compound having three to ten hydroxyl groups, R² hydrogen, an alkylene group of one to five carbons, or an acyl group of one to five carbons, R³ an alkylene group of two to four carbons, m an integer of 3 to 10, and n such an integer that a number average molecular weight of the polyalkylene glycol represented by said formula (1) becomes 500 to 3000 ,
wherein a kinematic viscosity at 100°C of said polyalkylene glycol is 5-20 mm²/s, and (ii) carbon dioxide as refrigerant.

## Patentansprüche

1. Fluidzusammensetzung für Kältemaschinen, wobei die Zusammensetzung (i) ein Kältemaschinenöl, das ein Polyalkylenglycol umfasst, das durch die folgende allgemeine Formel (1) wiedergegeben wird:
R¹{-(OR³)ₙ-OR²}ₘ (1)
wobei R¹ einen Rest bedeutet, der durch Entfernen von m Hydroxylgruppen von einer organischen Verbindung mit drei bis zehn Hydroxylgruppen erhalten wird, R² Wasserstoff, eine Alkylengruppe mit einem bis fünf Kohlenstoffatomen oder eine Acylgruppe mit einem bis fünf Kohlenstoffatomen bedeutet, R³ eine Alkylengruppe mit zwei bis vier Kohlenstoffatomen bedeutet, m eine ganze Zahl von drei bis zehn bedeutet und n eine solche ganze Zahl bedeutet, dass das Molekulargewicht-Zahlenmittel des durch die Formel (1) wiedergegebenen Polyalkylenglycols 500 bis 3000 beträgt,
wobei die kinematische Viskosität des Polyalkylenglycols bei 100°C 5 - 20 mm²/s beträgt,
und (ii) Kohlendioxid als Kältemittel umfasst.

## Revendications

1. Composition fluide pour machines réfrigérantes, ladite composition comprenant (i) une huile pour machine réfrigérante comprenant un polyalkylèneglycol représenté par la formule générale (1) suivante :
R¹{-(OR³)ₙ-OR²}ₘ (1)
dans laquelle R¹ représente un résidu obtenu en éliminant m groupes hydroxyles d'un composé organique ayant trois à dix groupes hydroxyle, R² représente un atome d'hydrogène, un groupe alkylène ayant un à cinq atomes de carbone, ou un groupe acyle ayant un à cinq atomes de carbone, R³ représente un groupe alkylène ayant deux à quatre atomes de carbone, m représente un nombre entier valant 3 à 10, et n représente un nombre entier tel qu'un poids moléculaire moyen en nombre du polyalkylèneglycol représenté par ladite formule (1) soit de 500 à 3 000,
dans laquelle une viscosité cinématique à 100°C dudit polyalkylèneglycol est de 5 à 20 mm²/s, et (ii) du dioxyde de carbone en tant que réfrigérant.
